(19) Europäisches Patentamt

European Patent Office

Office européen des brevets

(11) **EP 4 668 112 A1**

(12) **EUROPEAN PATENT APPLICATION**
published in accordance with Art. 153(4) EPC

(43) Date of publication:
**24.12.2025 Bulletin 2025/52**

(21) Application number: **23948797.8**

(22) Date of filing: **14.08.2023**

(51) International Patent Classification (IPC):
*G06F 9/50* (2006.01)

(52) Cooperative Patent Classification (CPC):
**G06F 9/50**

(86) International application number:
**PCT/CN2023/112935**

(87) International publication number:
**WO 2025/035362 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Shokz Co., Ltd.
Shenzhen, Guangdong 518108 (CN)**

(72) Inventors:
• **TIAN, Qingyuan
Shenzhen, Guangdong 518108 (CN)**
• **WANG, Liang
Shenzhen, Guangdong 518108 (CN)**
• **QIU, Jingbo
Shenzhen, Guangdong 518108 (CN)**

(74) Representative: **Santarelli
Tour Trinity
1 bis Place de la Défense
92400 Courbevoie (FR)**

(54) **DATA PROCESSING DEVICE AND METHOD**

(57) A data processing device and method is provided, the processing circuit comprises a multi-core processor, the multi-core processor comprises K-core subprocessors for participating in a target process in which the target data is subjected to N data processing stages to generate result data. Specifically, the processing circuit obtains the target data and determines N target computing powers corresponding to the N data processing stages; and in the target process, determines the allocation of the K cores in executing the N data processing stages based on the N target computing powers and a preset optimization objective. It can be seen that through the solution provided by the present application, during the operation of the data processing device, the computing power provided by the K cores for the N data processing stages can be determined, and the target computing power corresponding to each data processing stage can be adaptively allocated, which is beneficial to improving the flexibility of computing power allocation.

P100

S410 Obtain target data

S420 Determine N target computing powers corresponding to the N data processing stages

S430 In a target process, based on the N target computing powers and a preset optimization objective, determine allocation of K cores of a multi-core processor participating in the target process for executing the N data processing stages

FIG. 4

EP 4 668 112 A1

**Description**

**Technical Field**

The present specification relates to the field of data processing, and more particularly, to a data processing device and method.

**Background of the Invention**

A data processing device can perform multi-channel data processing, such as, in the case of a data processing device for processing audio signals, the audio signals can be subjected to: sampling, noise reduction, Bluetooth sub-band coding (SBC), as well as Bluetooth radio frequency, etc. It is understandable that the above-mentioned multi-channel data processing procedures can be implemented through hardware; some data processing can be implemented through algorithms; some data processing can be implemented either through hardware or through algorithms. For data processing implemented through algorithms, computing power needs to be provided for such processing. A chip of an existing data processing device provides at least two cores for the data processing procedures and plans in advance the data processing to be handled by each core. For example, Core 1 provides computing power for sampling and noise reduction, and Core 2 provides computing power for Bluetooth SBC and Bluetooth radio frequency.

The content in the background technology section is merely information personally known to the inventors and does not represent that the above information has entered the public domain prior to the filing date of the present disclosure, nor does it represent that it can be regarded as prior art of the present disclosure.

**Summary of the Invention**

The present specification provides a data processing device and method, capable of improving the flexibility of computing power allocation for data processing.

In a first aspect, a data processing device is provided, comprising: at least one storage medium, storing at least one set of instructions, where the at least one set of instructions is configured to perform computing power scheduling in a target process where target data undergoes N data processing stages to generate result data; and a processing circuit, comprising a multi-core processor and communicatively connected to the at least one storage medium, where the multi-core processor comprises a sub-processor of K cores participating in the target process, and K is an integer greater than 1, where during operation of the data processing device, the processing circuit executes the at least one set of instructions to: obtain the target data, determine N target computing powers corresponding to the N data processing stages, and in the target process, determine an allocation of the K cores in executing the N data processing stages based on the N target computing powers and a preset optimization objective.

In some embodiments, in order to determine the allocation of the K cores in executing the N data processing stages, the processing circuit executes the at least one set of instructions to: determine M initial allocation schemes for allocating respective cores to the N data processing stages according to the N target computing powers, where each of the initial allocation schemes satisfies that the computing power available to each of the cores is greater than or equal to a sum of the computing powers required by the corresponding data processing stages, M is an integer greater than or equal to 1; and determine a first target allocation scheme from the M initial allocation schemes to execute, based on the optimization objective.

In some embodiments, in order to determine the M initial allocation schemes, the processing circuit executes the at least one set of instructions to: determine a target total computing power required to execute the target process according to the N target computing powers; determine initial operating frequencies of the K cores according to the target total computing power; determine K available computing powers respectively corresponding to the K cores according to the initial operating frequencies; and determine the M initial allocation schemes according to the N target computing powers and the K available computing powers.

In some embodiments, each of the M initial allocation schemes comprises: at least one core participating in the target process, and an actual computing power provided by the at least one core participating in the target process and/or an actual operating frequency of the at least one core participating in the target process.

In some embodiments, in order to determine the allocation of the K cores in executing the N data processing stages, the processing circuit executes the at least one set of instructions to: determine, based on a preset algorithm, at least one core participating in the target process from among the K cores and determine an actual operating frequency of the at least one core participating in the target process, according to the N target computing powers, the K available computing powers respectively corresponding to the K cores, and the optimization objective.

In some embodiments, the optimization objective is to select, among multiple optional allocation schemes, an allocation scheme in which a target statistical value of actual computing powers respectively provided by the K cores is the smallest, where the statistical value is a variance or a standard deviation.

In some embodiments, the optimization objective comprises: maintaining an overall power consumption of the K cores at a lowest level and/or achieving a most balanced load.

In some embodiments, the processing circuit further executes the at least one set of instructions to: determine, during execution of the target process, a situation where the K cores have insufficient computing power; and increase the operating frequencies of the K cores to increase the computing power provided by the sub-processor, so as to avoid lag in a data processing process.

In some embodiments, the processing circuit further executes the at least one set of instructions to: determine, during execution of the target process, that there are O cores among the K cores having insufficient computing power, where O is a positive integer not greater than K; and increase the operating frequencies of the O cores to increase the computing power of a q-th core so as to avoid lag in a data processing process.

In some embodiments, the insufficient computing power comprises: any one of the K cores having a computing power utilization exceeding a first threshold.

In some embodiments, the processing circuit further executes the at least one set of instructions to: during execution of the target process, determine idle cores among the K cores with computing power utilization less than a second threshold, and stop the idle cores from performing corresponding data processing; based on the N target computing powers and at least one working core among the K cores excluding the idle cores, determine L reallocation schemes, where under each reallocation scheme, a total computing power provided by the at least one working core is greater than or equal to a total computing power required to execute the target process, where L is an integer greater than or equal to 1; and based on the optimization objective, determine a second target allocation scheme from the L reallocation schemes, and perform computing power allocation of the at least one working core for executing the N data processing tasks through the second target allocation scheme.

In some embodiments, to achieve the optimization objective, the processing circuit further executes the at least one set of instructions to: during execution of the target process, determine that a computing power provided by a p-th core for a j-th data processing is insufficient; determine the q-th core from the K cores to provide computing power for the j-th data processing; and transfer the execution of j-th data processing from the p-th core to the q-th core.

In some embodiments, the processing circuit further executes the at least one set of instructions to: prior to transferring the execution of the j-th data processing from the p-th core to the q-th core, increase an operating frequency of the q-th core to increase the computing power of the q-th core to avoid lag in the data processing process.

In some embodiments, the processing circuit further executes the at least one set of instructions to: during execution of the target process, determine R cores among the K cores with insufficient computing power, where R is a positive integer not greater than K; in response to idle cores among the K cores with a computing power utilization less than a second threshold, transfer at least part of the data processing corresponding to the R cores to the idle cores, where after the transfer, an available computing power of each of the cores is greater than or equal to a sum of computing powers required for the corresponding data processing.

In some embodiments, the at least one storage medium is further associated with storage of: attributes of the target data and target computing power corresponding to performing at least one data processing on the target data; in order to determine the N target computing powers corresponding to the N data processing stages, the processing circuit executes the at least one set of instructions to: search the at least one storage medium according to obtained attributes of the target data to obtain the N target computing powers corresponding to performing the N data processing stages on the target data.

In some embodiments, the processing circuit executes the at least one set of instructions to: in response to the at least one storage medium not storing the N target computing powers corresponding to performing N data processing stages on the target data with a target attribute, calculate the N target computing powers respectively required for processing the target data with the target attribute in the N data processing stages; and store, in association with the target attribute, the N target computing powers corresponding to performing the N data processing stages on the target data with the target attribute into the at least one storage medium.

In some embodiments, the at least one storage medium further stores: for multiple attributes of the target data, core identifiers that provide computing power for processing the target data with each attribute respectively for the N data processing stages; in order to determine the allocation of the K cores in executing the N data processing stages, the processing circuit executes the at least one set of instructions to: search the at least one storage medium according to a target attribute of the target data to obtain the core identifiers that provide computing power respectively for the N data processing stages for processing the target data with the target attribute, so as to determine the allocation of the K cores in executing the N data processing stages.

In some embodiments, the data processing device is a headphone.

In a second aspect, a data processing method is provided, comprising: obtaining target data; determining N target computing powers corresponding to performing N data processing stages; and in a target process, determining, based on the N target computing powers and a preset optimization objective, the allocation of K cores in a multi-core processor for executing the N data processing stages, where K is an integer greater than 1, where the target process is a process of generating result data from the target data through the N data processing stages.

In some embodiments, the determining of the allocation of the K cores for executing the N data processing stages comprises: determining M initial allocation schemes for allocating respective cores to the N data processing stages according to the N target computing powers, where each of the initial allocation schemes satisfies that the computing power available to each of the cores is greater than or equal to a sum of the computing powers required by the corresponding data processing stages, M is an integer greater than or equal to 1; and determining a first target allocation scheme from the M initial allocation schemes to execute, based on the optimization objective.

In some embodiments, the determining of the M types of initial allocation schemes comprises: determining a target total computing power required to execute the target process according to the N target computing powers; determining initial operating frequencies of the K cores according to the target total computing power; determining K available computing powers respectively corresponding to the K cores according to the initial operating frequencies; and determining the M initial allocation schemes according to the N target computing powers and the K available computing powers.

In some embodiments, each of the M initial allocation schemes comprises: at least one core participating in the target process, and an actual computing power provided by the at least one core participating in the target process and/or an actual operating frequency of the at least one core participating in the target process.

In some embodiments, the determining of the allocation of the K cores in executing the N data processing stages comprises: determining, based on a preset algorithm, at least one core participating in the target process from among the K cores and determine an actual operating frequency of the at least one core participating in the target process, according to the N target computing powers, the K available computing powers respectively corresponding to the K cores, and the optimization objective.

In some embodiments, the optimization objective is to select, among multiple optional allocation schemes, an allocation scheme in which a target statistical value of actual computing powers respectively provided by the K cores is the smallest, where the statistical value is a variance or a standard deviation.

In some embodiments, the optimization objective comprises: maintaining an overall power consumption of the K cores at a lowest level and/or achieving a most balanced load.

In some embodiments, the method further comprises: determining, during execution of the target process, a situation where the K cores have insufficient computing power; and increasing the operating frequencies of the K cores to increase the computing power provided by the sub-processor, so as to avoid lag in a data processing process.

In some embodiments, the method further comprises: during execution of the target process, determining that there are O cores among the K cores having insufficient computing power, where O is a positive integer not greater than K; and

increasing the operating frequencies of the O cores to increase the computing power of a q-th core so as to avoid lag in a data processing process.

In some embodiments, the insufficient computing power comprises: any one of the K cores having a computing power utilization exceeding a first threshold.

In some embodiments, the method further comprises: during execution of the target process, determining idle cores among the K cores with computing power utilization less than a second threshold, and stop the idle cores from performing corresponding data processing; based on the N target computing powers and at least one working core among the K cores excluding the idle cores, determining L reallocation schemes, where under each reallocation scheme, a total computing power provided by the at least one working core is greater than or equal to a total computing power required to execute the target process, where L is an integer greater than or equal to 1; and based on the optimization objective, determining a second target allocation scheme from the L reallocation schemes, and performing computing power allocation of the at least one working core for executing the N data processing tasks through the second target allocation scheme.

In some embodiments, the method further comprises: during execution of the target process, determining that a computing power provided by a p-th core for a j-th data processing is insufficient; determining the q-th core from the K cores to provide computing power for the j-th data processing; and transferring the execution of j-th data processing from the p-th core to the q-th core.

In some embodiments, the method further comprises: prior to transferring the execution of the j-th data processing from the p-th core to the q-th core, increase an operating frequency of the q-th core to increase the computing power of the q-th core to avoid lag in the data processing process.

From the above technical solution, it can be seen that the data processing device and method provided by the present application, where the processing circuit includes a multi-core processor, the multi-core processor includes K-core sub-processors for participating in a target process in which the target data is subjected to N data processing stages to generate result data. Specifically, the processing circuit obtains the target data, and determines N target computing powers corresponding to the N data processing stages; and in the target process, determines the allocation of the K cores in executing the N data processing stages based on the N target computing powers and a preset optimization objective. It can be seen that through the solution provided by the present application, during the operation of the data processing device, the computing power provided by the K cores for the N data processing stages can be determined, and the target computing power corresponding to each data processing stage can be adaptively allocated, which is beneficial to improving the flexibility of computing power allocation.

Other functions of the data processing device and method provided in the present specification will be partially listed in the following description. According to the description, the contents introduced by the following figures and examples will be obvious to a person skilled in the art. The inventive aspects of the data processing device and method provided by the present specification can be fully explained by practicing or using the methods, devices, and combinations described in the detailed examples below.

## Brief Description of the Drawings

In order to more clearly illustrate the technical solutions in the embodiments of the present specification, a brief introduction to the drawings required in the description of the embodiments is provided below. Obviously, the drawings described below are only some embodiments of the present specification. For a person of ordinary skill in the art, other drawings can also be obtained based on these drawings without any creative efforts.

FIG. 1 shows a schematic diagram of an application scenario provided according to some embodiments of the present application;

FIG. 2 shows a schematic structural diagram of a data processing device provided according some embodiments of the present application;

FIGs. 3A-3C respectively show schematic structural diagrams of a processing circuit provided according to some embodiments of the present application;

FIG. 4 shows a flowchart of a data processing method provided according to some embodiments of the present application;

FIG. 5 shows a flowchart of a computing power initial allocation method provided according to some embodiments of the present application;

FIG. 6 shows a flowchart of a data processing method provided according to some embodiments of the present application;

FIG. 7 shows a flowchart of a computing power initial allocation method provided according to some embodiments of the present application;

FIG. 8 shows a schematic diagram illustrating the relationship between the operating frequency of processor cores and processor power consumption, as well as the relationship between the number of operating cores of the processor and processor power consumption, provided according to some embodiments of the present application;

FIG. 9 shows a flowchart of a computing power reallocation method in the case of insufficient computing power, provided according to some embodiments of the present application; and

FIG. 10 shows a flowchart of a computing power reallocation method in the case of excessive computing power, provided according to some embodiments of the present application.

## Detailed Description of Embodiments

The following description provides specific application scenarios and requirements of this specification, with the aim of enabling a person skilled in the art to make and use the contents of this specification. For a person skilled in the art, various partial modifications to the disclosed embodiments are obvious, and the general principles defined here can be applied to other embodiments and applications without departing from the spirit and scope of this specification. Therefore, this specification is not limited to the embodiments shown but is consistent with the broadest scope of the claims.

The terms used herein are for the purpose of describing specific example embodiments only and are not restrictive. For example, unless the context clearly indicates otherwise, the singular forms "a," "an," and "the" as used here may also include the plural forms. When used in this specification, the terms "comprising," "including," and/or "containing" mean that the associated integer, step, operation, element, and/or component is present, but do not preclude the presence or addition of one or more other features, integers, steps, operations, elements, components, and/or groups in the system/method.

Considering the following description, these features and other features of this specification, as well as the operation and function of related elements of the structure, and the combination of components and the economy of manufacture, can be significantly improved. With reference to the drawings, all of which form a part of this specification. However, it should be clearly understood that the drawings are for the purpose of illustration and description only and are not intended to limit the scope of this specification. It should also be understood that the drawings are not drawn to scale.

The flowchart used in this specification illustrates the operations implemented by the system according to some embodiments of this specification. It should be clearly understood that the operations of the flowchart may not be implemented in order. On the contrary, operations may be implemented in reverse order or simultaneously. Additionally, one or more other operations may be added to the flowchart. One or more operations may be removed from the flowchart.

The data processing device provided by the embodiments of this application can be used for processing audio data, video data, text data, code, etc., and the embodiments of this application do not impose limitations on this. Similarly, the data processing method provided by the embodiments of this application is not limited to the processes of audio data processing, video data processing, text data processing, code processing, etc. Taking the processing of audio signals by a data processing device as an example, the aforementioned data processing device can be a speaker used for voice playback or various devices equipped with speakers (e.g., headphones, audio systems, televisions, smartphones, smart home devices, etc.), or a microphone used for voice reception or various devices equipped with microphones (e.g., headphones, smartphones, smartwatches, smart home devices, etc.). It can be understood that it may also be a device that includes both a microphone and a speaker, such as headphones, smartphones, etc. In the embodiments of this application, the data processing device is described using headphones as an example.

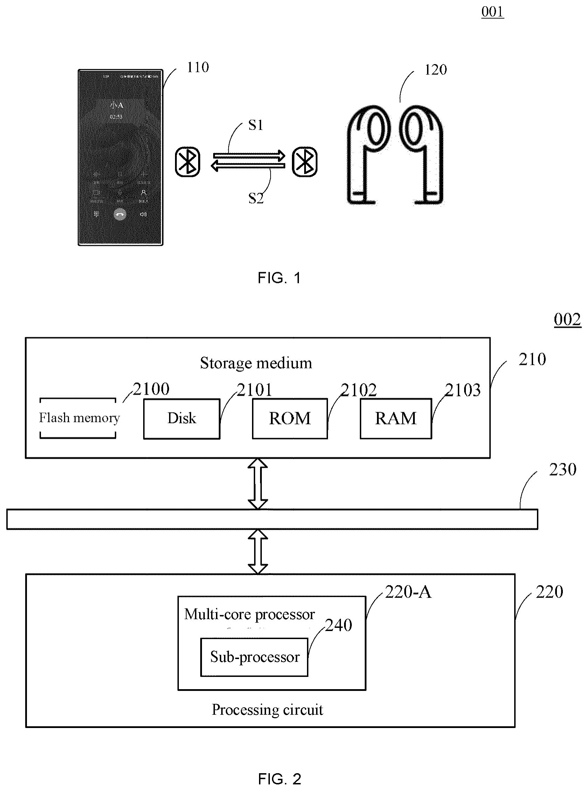

FIG. 1 illustrates a schematic diagram of an application scenario provided according to an embodiment of this application. In this embodiment, the data processing device is exemplified by a wireless headphone 120 used for audio signal processing. Referring to FIG. 1, the scenario shown in the figure is a call scenario 001 conducted after the electronic device 110 is communicatively connected with the wireless headphone 120. It can be understood that the solution provided by this application can also be applied to other scenarios involving the transmission and reception of audio using a data processing device, such as listening to music through headphones, or scenarios involving listening to dialogue while watching videos, etc.

The electronic device 110 can be a handheld device, an in-vehicle (onboard) device, a wearable device, a computing device, or other devices connected to a wireless modem. The aforementioned electronic device 110 may include: a smartphone, a cellular phone, a tablet computer, a personal digital assistant (PDA) computer, a laptop computer, an in-vehicle computer, a smart watch, a smart wristband, a pedometer, and other electronic devices with call functions. In the embodiments of this application, the communication device is described using a headphone as an example. Headphones can generally be divided into wired headphones (wired headphone or wired headset) and wireless headphones (wireless headset). Wired headphones are inserted into the jack of an electronic device through a connection cable to communicate with the electronic device. Wireless headphones use wireless communication technologies (e.g., Bluetooth technology, infrared radio frequency technology, 2.4 G wireless technology, ultrasonic, etc.) to communicate with the electronic device 110. Referring to the call scenario 001 shown in FIG. 1, the wireless headphone 120 communicates with the electronic device 110 via Bluetooth.

Referring to S1 shown in FIG. 1, the wireless headphone 120 can serve as a receiver of audio signals. The speaker of the wireless headphone 120 receives the audio signals sent by the electronic device 110 during a call, and after performing a series of processing on the received audio signals (such as digital-to-analog conversion, signal amplification, etc.), converts them into sound waves audible to the user.

Referring to S2 shown in FIG. 1, the wireless headphone 120 can serve as a transmitter of audio signals. The microphone of the wireless headphone 120 receives audio signals emitted by the user during a call, and after performing a series of processing on the received audio signals (such as analog-to-digital conversion (ADC) sampling, noise reduction processing, Bluetooth SBC, and Bluetooth radio frequency), transmits them to the electronic device 110.

With the expansion of application scenarios, data processing methods have gradually diversified, such as mixing audio signals, resampling modules, Advanced Audio Coding (AAC) encoding and decoding, echo cancellation, noise suppression, and so on. Meanwhile, the computing power required for audio signal processing continues to increase; therefore, the cores in the chip of the data processing device dedicated to audio signal processing are generally set to multiple. In the related art, the data processing responsibility of each core is generally planned in advance, for example, core 1 provides computing power for sampling and noise reduction, core 2 provides computing power for Bluetooth SBC and Bluetooth radio frequency, core 3 provides computing power for echo cancellation, and so forth. However, the computing power allocation method provided in the related art has the problem of inflexible computing power allocation, resulting in insufficient utilization of core computing power and/or insufficient core computing power. For example, core 1 is planned in advance to provide computing power for sampling and noise reduction, but there is a situation where the computing power required for sampling and noise reduction of audio a is greater than the total computing power that core 1 can provide, that is, there is a problem of insufficient computing power of core 1; another example is that core 3 is planned in advance to provide computing power for echo cancellation, but there is a case where audio a does not require echo cancellation, that is, there is a problem of insufficient utilization of computing power of core 3.

FIG. 2 shows a schematic structural diagram of a data processing device provided according to an embodiment of the present application. The data processing device 002 may be a device for processing audio data, video data, text data, etc. Taking the device for processing audio data as an example, it may be a wired headphone or a wireless headphone. The data processing device 002 may be applied in a call scenario as shown in FIG. 1. It is understood that the data processing device 002 may also be applied in other scenarios of sending and receiving audio using audio communication devices.

Referring to FIG. 2, the data processing device 002 may include: at least one storage medium 210, where the storage medium 210 may be a non-transitory storage medium or a transitory storage medium. For example, the data storage device may include one or more of: Flash Memory 2100, Disk 2101, Read-Only Memory (ROM) 2102, Random Access Memory (RAM) 2103. The above stores at least one set of instructions, the instruction set includes instructions, and the above instructions are computer program code. The computer program code may include programs, routines, objects, components, data structures, processes, modules, etc. for executing the data processing method provided in the embodiments of the present application. Specifically, the at least one set of instructions stored in the storage medium 210 is used for computing power scheduling during the data processing process. It should be noted that in the embodiments of the present application, the data processing process in which the target data passes through N data processing stages to generate result data is referred to as the target process, where N is an integer greater than 1. That is to say, the at least one set of instructions stored in the storage medium 210 is used to provide computing power respectively for the N data processing stages in the above-mentioned target process.

Referring to FIG. 2, the data processing device 002 further includes: a processing circuit 220. The processing circuit 220 is used to determine or adjust the computing power allocation for the N data processing stages in the above-mentioned target process. Specifically, when the data processing device 002 is operating, the processing circuit 220 reads the at least one set of instructions stored in the storage medium 210 to obtain target data, determine the N target computing powers corresponding to the above-mentioned N data processing stages, and determine or adjust the computing power allocation for the N data processing stages in the above-mentioned target process. In some embodiments, further, when the data processing device 002 is operating, the processing circuit 220 reads the at least one set of instructions stored in the storage medium 210 to execute the above-mentioned N processing stages, so as to process the above-mentioned target data into result data.

Specifically, the processing circuit 220 includes a multi-core processor 220-A. The multi-core processor 220-A is used to provide computing power for the N data processing stages in the above-mentioned target process. More specifically, the K cores of sub-processor 240 included in the multi-core processor 220-A are used to provide computing power for the N data processing stages in the above-mentioned target process, where K is an integer greater than 1. It is understood that the above-mentioned K cores may be all cores of the sub-processor 240, or part of the cores of the sub-processor 240, which is not limited in the embodiments of the present application. The multi-core processor 220-A may be, for example, a quad-core processor, an octa-core processor, etc., and the embodiments of the present application do not limit the number of cores. The embodiments of the present application also do not limit the type of the multi-core processor 220-A. Specifically, the type of the multi-core processor 220-A may include: Central Processing Unit (CPU), Graphics Processing Unit (GPU), Physics Processing Unit (PPU), microcontroller unit, Digital Signal Processor (DSP), Field Programmable Gate Array (FPGA), Programmable Logic Device (PLD), microcontroller, microprocessor, Reduced Instruction Set Computer (RISC), Advanced RISC Machine (ARM), Application Specific Integrated Circuit (ASIC), that is, the multi-core processor 220-A may be any circuit or processor capable of executing one or more functions, or any combination thereof.

Specifically, the above-mentioned processing circuit 220 is in communication connection with the above-mentioned storage medium 210. Referring to FIG. 2, in some embodiments, the data processing device 002 may further include an internal communication bus 230. The internal communication bus 230 may connect different system components in the data processing device 002. For example, the internal communication bus 230 connects the above-mentioned processing circuit 220 with the above-mentioned storage medium 210, so that the processing circuit 220 can read at least one set of instructions from the storage medium 210 to obtain target data, determine the N target computing powers corresponding to the above-mentioned N data processing stages, and determine or adjust the computing power allocation for the N data processing stages in the above-mentioned target process. As a result, the computing power of the K cores in the sub-processor 240 can be adaptively provided to the above-mentioned N data processing stages, thereby facilitating the improvement of the flexibility of computing power allocation of the data processing device.

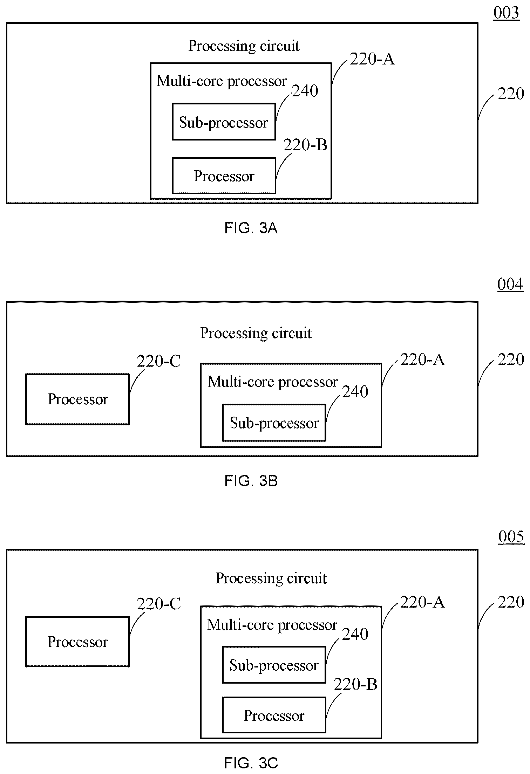

FIG. 3A shows a schematic structural diagram of a processing circuit provided according to an embodiment of the present application. Referring to the processing circuit 003 shown in the figure, in some embodiments, specifically, the multi-core processor 220-A in the processing circuit 220, in addition to including the sub-processor 240 used to provide computing power, further includes a processor 220-B. The processor 220-B may be specifically used to read the at least one set of instructions stored in the storage medium 210 to obtain target data, determine the N target computing powers corresponding to the above-mentioned N data processing stages, and determine or adjust the computing power allocation for the N data processing stages in the above-mentioned target process, and after determining the computing power allocation in the above-mentioned target process, execute the above-mentioned N data processing stages so as to process the above-mentioned target data into result data.

FIG. 3B shows another schematic structural diagram of a processing circuit provided according to an embodiment of the present application. Referring to the processing circuit 004 shown in the figure, in some embodiments, specifically, the processing circuit 220 includes, in addition to the multi-core processor 220-A, a processor 220-C that is independent of the multi-core processor 220-A. The processor 220-C may be specifically used to read the at least one set of instructions stored in the storage medium 210 to obtain target data, determine the N target computing powers corresponding to the above-mentioned N data processing stages, and determine or adjust the computing power allocation for the N data processing stages in the above-mentioned target process, and after determining the computing power allocation in the above-mentioned target process, execute the above-mentioned N data processing stages so as to process the above-mentioned target data into result data.

FIG. 3C shows still another schematic structural diagram of a processing circuit provided according to an embodiment of the present application. Referring to the processing circuit 005 shown in the figure, in some embodiments, specifically, the processing circuit 220 includes, in addition to the multi-core processor 220-A, a processor 220-C that is independent of the multi-core processor 220-A; meanwhile, the multi-core processor 220-A, in addition to including the sub-processor 240 used to provide computing power, further includes a processor 220-B. In this embodiment, the processor 220-C and/or the processor 220-B may be specifically used to read the at least one set of instructions stored in the storage medium 210 to obtain target data, determine the N target computing powers corresponding to the above-mentioned N data processing stages, and determine or adjust the computing power allocation for the N data processing stages in the above-mentioned target process, and after determining the computing power allocation in the above-mentioned target process, execute the above-mentioned N data processing stages so as to process the above-mentioned target data into result data. That is to say, the above-mentioned process of the data processing device may be implemented solely by the processor 220-B, solely by the processor 220-C, or cooperatively by the processor 220-B and the processor 220-C in a division of labor.

The embodiments of the present application do not limit the types of the processor 220-B and the processor 220-C, which may be any one or a combination of the types of processors described above. It is understood that the data processing device 002 shown in FIG. 2 illustrates a case including only one processor 220-B and one processor 220-C. However, it should be noted that the data processing device 002 provided in the embodiments of the present application may also include multiple processors 220-B and multiple processors 220-C.

It will be understood by a person skilled in the art that the processing circuit 220 may also include other hardware circuit structures, which are not limited in the embodiments of the present application, as long as the functions mentioned in the present application can be satisfied without departing from the spirit of the present application.

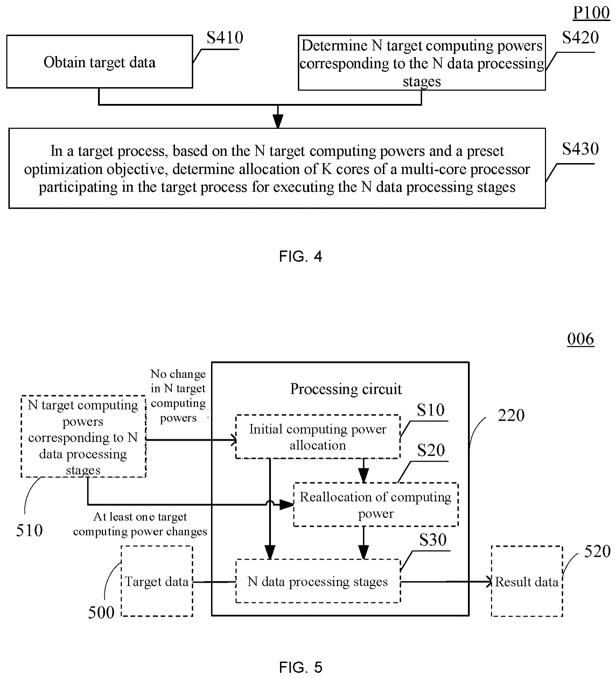

FIG. 4 shows a flowchart of a data processing method provided according to an embodiment of the present application. The data processing method P100 may be applied to the data processing device 002 as described above. Specifically, the processing circuit 220 may execute the data processing method P100. For example, the processor 220-B in the processing circuit 220 may execute the data processing method P100. As shown in FIG. 4, the data processing method P100 may include: S410-S430, where the execution order of S410 and S420 is not limited. The processor 220-B may execute S410 first and then S420, or execute S420 first and then S410, or execute S410 and S420 simultaneously. The embodiments of the present application do not limit this.

S410: Obtain target data.

In some embodiments, the processor 220-B obtains the target data.

In one exemplary embodiment, the above-mentioned target data is an audio signal to be processed by the data processing device. Specifically, it may be the original audio electrical signal received by the data processing device and not yet processed by the device, for example, from an electronic device or a user. Specifically, the processor 220-B determines the original audio signal from the electronic device 110 or the user as the above-mentioned target data.

In another exemplary embodiment, for processing operations performed on audio signals, the "target data" is the intermediate audio signal to be processed in the operation. For example, when the audio signal undergoes ADC sampling processing and noise reduction processing sequentially, for the noise reduction processing, the above-mentioned target data is the signal after ADC sampling processing. Similarly, when the audio signal undergoes noise reduction processing and Bluetooth SBC processing sequentially, for the Bluetooth SBC processing, the above-mentioned target data is the signal after noise reduction processing. In some embodiments, specifically, after reading the execution command for data processing, the processor 220-B determines a certain intermediate audio signal in the processing as the target data for the data processing stage to be executed.

That is to say, since the processing object of the data processing method provided in the embodiments of the present application can be the original audio electrical signal received by the data processing device and not yet processed by the data processing device, the data processing device can execute the data processing method shown in FIG. 4 on the received original audio signal; since the processing object of the data processing method provided in the embodiments of the present application can also be an intermediate audio signal after the audio processing device has performed at least one audio signal processing on the received original audio electrical signal, the data processing device can execute the data processing method shown in FIG. 4 on the intermediate audio signal in the processing. It can be seen that the data processing method provided in the embodiments of the present application has a wide scope of application and flexible application modes, and can be applied both to the original audio signal just received and not yet processed, and to the intermediate audio signal in the processing.

In S420, Determine N target computing powers corresponding to the N data processing stages.

Exemplarily, the processor 220-B determines the N target computing powers corresponding to the N data processing stages.

In the case where the processing object is the above-mentioned original audio signal, the N data processing stages may refer to a series of processes performed on the original audio signal. For example, referring to FIG. 1, the microphone of the wireless headphone 120 receives the original audio signal emitted by the user during a call. Further, the processor 220-B determines the series of processes for the original audio signal and the computing power required for each process (i.e., the target computing power). For instance, the series of processes on the original audio signal includes: ADC sampling, noise reduction processing, Bluetooth SBC, and Bluetooth RF. In this embodiment, the target computing power p1 corresponding to ADC sampling, the target computing power p2 corresponding to noise reduction processing, the target computing power p3 corresponding to Bluetooth SBC, and the target computing power p4 corresponding to Bluetooth RF are determined.

In the case where the processing object is the above-mentioned intermediate audio signal, the N data processing stages may refer to a series of processes performed on the intermediate audio signal. For example, referring to FIG. 1, the microphone of the wireless headphone 120 receives the original audio signal emitted by the user during a call and performs ADC sampling on the original audio signal. Further, the processor 220-B determines the series of processes for the intermediate audio signal after ADC sampling and the computing power required for each process (i.e., the target computing power). For example, the series of processes on the intermediate audio signal after ADC sampling includes: noise reduction processing, Bluetooth SBC, and Bluetooth RF. In this embodiment, the target computing power p2 corresponding to noise reduction processing, the target computing power p3 corresponding to Bluetooth SBC, and the target computing power p4 corresponding to Bluetooth RF are determined.

The computing power metrics can be Million Instructions Per Second (MIPS), Dhrystone Million Instructions executed Per Second (DMIPS), Operations Per Second (OPS), Floating Point Operations Per Second (FLOPS), or Hashes Per Second (Hash/s), etc.

In the embodiments of the present application, the processor 220-B may obtain the target computing power corresponding to the target data processing of the N data processing stages by determining the target computing power based on the actual operation of the target data processing. Specifically, during system initialization, the processor 220-B may determine the required duration $\times$ MIPS for actually running the target data processing on a single core, thereby obtaining an accurate value of the target computing power required to run each data processing stage to process the target data. In an exemplary embodiment, the above-mentioned storage medium 210 includes a storage area for a "scheduling record." After determining the target computing power corresponding to processing the target data through the above-mentioned target data processing, the target data processing stage, its corresponding target computing power, and the attributes of the processed target data can be associatively stored in the storage area of the "scheduling record" (such as Table 1).

Table 1

| N data processing stages | Target data attributes | Target computing power |
|---|---|---|
| ADC sampling | 16-bit audio signal | x1 |
| ADC sampling | 32-bit audio signal | x2 |
| Noise reduction processing | 16-bit audio signal | X3 |
| ...... | ...... | ...... |

Taking an audio signal as an example, the attribute of the target data is related to the size of the space it occupies. For instance, the attribute of the audio signal as the target data may be 16-bit, 32-bit, etc. Referring to Table 1, in some embodiments, the processor 220-B determines that the computing power required to perform the above ADC sampling process on one core to process a 16-bit audio signal is x1, and the processor 220-B determines that the computing power required to perform the above ADC sampling process on one core to process a 32-bit audio signal is x2.

In the embodiments of the present application, the target computing power as shown in Table 1 can be determined not only by actually performing each data processing operation, but also by being manually set during the system initialization process. For example, the computing power required for the above ADC sampling process to process a 32-bit audio signal can be set as x4, thereby providing a variety of ways to determine the target computing power corresponding to each data processing operation. It should be noted that for target data with the same attribute, the computing power required for the same data processing operation is fixed. For example, the storage medium 210 includes a storage area regarding the "scheduling record" which records that the computing power required for the above ADC sampling process to process a 32-bit audio signal can only be x4, and it is not allowed that the computing power required for the above ADC sampling process to process a 32-bit audio signal is both x4 and x5 at the same time, so as to ensure the smooth execution of the data processing method.

In some embodiments, the target computing power required for each data processing can be determined by looking up the storage area regarding the "scheduling record" in the storage medium. Specifically, according to the attribute of the target data to be processed, the storage area regarding the "scheduling record" (such as Table 1) is searched, and the target computing power required for each of the multiple data processing operations for processing the target data with the above attribute can be quickly obtained, thereby facilitating the improvement of the processing efficiency of the data (such as audio signals).

In the case where the storage area regarding the above "scheduling record" does not contain any record, the processor 220-B cannot determine the target computing power by looking up the storage area of the "scheduling record". **In** some embodiments, for this situation, another method is also provided for the processor 220-B to obtain the target computing power corresponding to the target data processing among the N data processing stages:

The processor 220-B determines the length of the code segment corresponding to the target data processing multiplied by a coefficient as the computing power required to perform the target data processing, that is, obtains the target computing power corresponding to the target data processing. The above coefficient is related to the attribute of the target data to be processed and can be set as needed according to the actual situation, and the embodiments of the present application do not impose any limitation on this. Further, the calculated target computing power can also be stored in the storage area of the "scheduling record" in the format shown in Table 1, thereby enriching the storage area of the "scheduling record" and facilitating subsequent lookup of the target computing power.

Continuing to refer to FIG. 4, S430: In a target process, based on the N target computing powers and a preset optimization objective, determine allocation of K cores of a multi-core processor participating in the target process for executing the N data processing stages.

As described above, the target process refers to the process of generating result data by processing the target data through the above N data processing stages. In the embodiments provided by the present application, in the target process, the processor 220-B determines the allocation of the K cores of the sub-processor for executing the above N data processing stages according to the above N target computing powers and the preset optimization objective. It should be noted that the cores participating in the above target process may be a portion of the K cores of the sub-processor, or may also be all of the K cores.

FIG. 5 shows a structural schematic diagram of a processing circuit provided according to an embodiment of the present application. Referring to FIG. 5, after obtaining the above target data 500 and determining the N target computing powers 510 corresponding to the N data processing stages, the processing circuit 006 provided in the embodiment of the present application further allocates the core computing power to smoothly execute the N data processing stages (S30), and then the processing circuit 220 (specifically, the processor 220-B) outputs the result data 520.

Exemplarily, the above N data processing stages for the above target data can be regarded as a data processing link for the target data. Referring to FIG. 5, the computing power allocations executed by the processing circuit 220 (specifically, the processor 220-B) include: initial computing power allocation S10 and reallocation of computing power S20. The initial computing power allocation refers to the computing power allocation performed on a data processing link that has not undergone computing power allocation, according to the computing power required for each data processing operation in the data processing link and a preset optimization objective, so as to achieve the optimization objective of maximizing the overall power consumption and/or most balanced load of the sub-processor, while ensuring that each data processing operation can be smoothly executed, thereby guaranteeing the user's experience in using the data processing device. After at least one computing power allocation has been performed, if in a data processing link the computing power required for a certain data processing operation changes, then there may be a situation of insufficient computing power or excessive computing power. Then, based on the changed computing power required for each data processing operation and the preset optimization objective, reallocation of computing power is further required. This can be understood as adjusting the current computing power allocation of the data processing link, in order to maintain the optimization objective of maximizing the overall power consumption and/or most balanced load of the sub-processor.

It should be noted that in a data processing link for the target data, there may be a serial relationship, such as performing Bluetooth SBC followed by Bluetooth RF in the case where the target data is an audio signal. However, considering the timeliness of audio signal processing, in the embodiments of the present application, it is ensured that sufficient computing power is continuously provided for all data processing operations in the above target process of the data processing link, thereby ensuring the timeliness of audio signal processing and further improving the user's experience in using the data processing device.

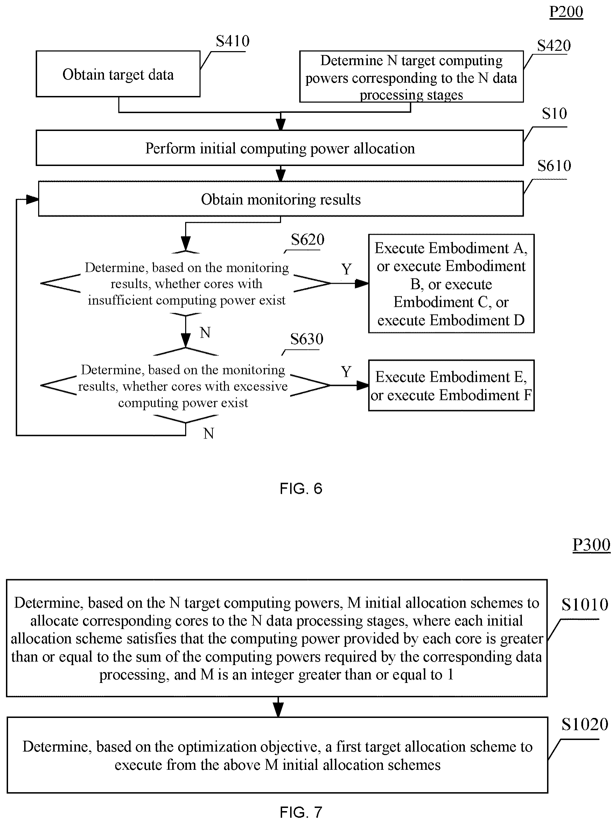

FIG. 6 shows a schematic flowchart of a data processing method provided according to an embodiment of the present application. The data processing method P200 can be applied to the data processing device 002 as described above. Specifically, the processing circuit 220 can execute the data processing method P200. For example, the processor 220-B in the processing circuit 220 can execute the data processing method P200. As shown in FIG. 6, steps S410 and S420 in the data processing method P200 are the same as the specific embodiments of the data processing method P100 in FIG. 4, and will not be repeated here; in addition, the data processing method P200 shown in FIG. 6 provides a specific embodiment of S430, including S10 and S610 to S630.

S10: Perform initial computing power allocation.

With reference to FIG. 5, after obtaining the above target data 500 and determining the N target computing powers 510 corresponding to the N data processing stages, the processing circuit 220 (e.g., processor 220-B) further executes S10 to perform the initial computing power allocation to determine a target allocation scheme. The processor 220-B allocates the computing power values of the K cores to the above N data processing stages based on the target allocation scheme, and then executes the N data processing stages.

FIG. 7 shows a schematic flowchart of an initial computing power allocation method provided according to an embodiment of the present application. The initial computing power allocation method P300 can serve as an embodiment of the initial computing power allocation S10 and can be applied to the data processing device 002 as described above. Specifically, in order to determine the allocation of the above K cores in executing the above N data processing stages, at least one set of instructions stored in the at least one storage medium corresponds to the initial computing power allocation method P300, where the processing circuit 220 can execute the initial computing power allocation method P300. For example, the processor 220-C in the processing circuit 220 can execute the initial computing power allocation method P300. As shown in FIG. 7, the data processing method P300 may include: S1010 to S1020.

S1010: Determine, based on the N target computing powers, M initial allocation schemes to allocate corresponding cores to the N data processing stages, where each initial allocation scheme satisfies that the computing power provided by each core is greater than or equal to the sum of the computing powers required by the corresponding data processing, and M is an integer greater than or equal to 1.

Exemplarily, to determine the above M initial allocation schemes, the at least one set of instructions stored in the at least one storage medium specifically includes: S1, determining the target total computing power required to perform the above target process according to the above N target computing powers; S2, determining the initial operating frequency of the above K cores according to the target total computing power and the number K of cores providing computing power; S3, determining the K computings powers respectively corresponding to the above K cores according to the above initial operating frequency; and S4, determining the above M initial allocation schemes according to the above N target computing powers and the K computings powers.

Each of the above M initial allocation schemes includes: at least one core participating in the above target process, and the actual computing power provided by the at least one core participating in the above target process and/or the actual operating frequency of the at least one core participating in the above target process. In each initial allocation scheme, the maximum number of cores participating in the above target process is K. Exemplarily, in one initial allocation scheme, the operating frequency of all cores participating in the above target process may be the same (such as the initial operating frequency); of course, the operating frequencies of different cores participating in the above target process may also be the same.

Specifically, the processor 220-B in the processing circuit 220 can execute the above S1 to S4. Taking the data processing link of the audio signal received from the microphone of the wireless headphone 120 during a call as an example, the processor 220-B according to the foregoing embodiments determines the target computing power corresponding to each data processing operation: the target computing power p1 corresponding to ADC sampling, the target computing power p2 corresponding to noise reduction processing, the target computing power p3 corresponding to Bluetooth SBC, and the target computing power p4 corresponding to Bluetooth RF. Then, the processor 220-B can determine the target total computing power required for the data processing link: P = p1 + p2 + p3 + p4. It can be understood that the factors affecting FLOPS as a measure of computing power include: the number of cores of the sub-processor providing computing power, the operating frequency of each core, and the floating-point calculation value per cycle of the sub-processor. In the initial computing power allocation process, assuming that the initial operating frequencies of all cores in the sub-processor are the same, and since the target total computing power P required for the data processing link, the number of cores K of the sub-processor providing computing power, and the floating-point calculation value per cycle of the sub-processor are known, the initial operating frequency of the K cores can be determined, denoted as f0.

Further, the processor 220-B determines the computing power that each core can respectively provide based on the initial operating frequency f0. The computing power provided by each core is: f0 multiplied by the floating-point calculation value per cycle of the sub-processor. The processor 220-B, according to the target computing powers p1, p2, p3, and p4 respectively required for the N data processing stages, and the computing powers respectively provided by K (assumed to be 3) cores, can determine M initial allocation schemes (such as Table 2). In this embodiment, each initial allocation scheme includes: the identification of the cores participating in the above target process, and the actual computing power provided by each core participating in the above target process when the operating frequency is f0.

Table 2

|  | Core 1 | Core 2 | Core 3 |
|---|---|---|---|
| Initial allocation scheme 1 | p1, p2 | p3 | p4 |
| Initial allocation scheme 2 | p1, p2 | p4 | p3 |
| Initial allocation scheme 3 | p3 | p1 | p2, p4 |
| ...... | ...... | ...... | ...... |

It should be noted that, in order to ensure the smooth execution of the audio processing process, each initial allocation scheme satisfies that the computing power that each core can provide is greater than or equal to the sum of the computing powers required by the target process, and at the same time, the computing power that each core can provide is greater than or equal to the actual computing power provided. For example, referring to Table 2, in initial allocation scheme 1, the computing power that core 1 can provide is greater than the actual computing power p1 + p2 provided, the computing power that core 2 can provide is greater than the actual computing power p3 provided, and the computing power that core 3 can provide is greater than the actual computing power p4 provided.

Continuing to refer to FIG. 7, S1020: determine, based on the optimization objective, a first target allocation scheme to execute from among the above M initial allocation schemes.

In this embodiment, the first target allocation scheme determined based on the above optimization objective specifically refers to selecting, among multiple optional initial allocation schemes, the allocation scheme whose target statistical value of the actual computing powers provided by the corresponding K cores of the above K cores is the smallest, where the statistical value is variance or standard deviation. Alternatively, the first target allocation scheme determined by the above optimization objective specifically refers to the first target scheme selected from multiple optional initial allocation schemes that can maintain the lowest overall power consumption and/or the most balanced load of the K cores providing computing power in the sub-processor. Through the above optimization objective, the first target allocation scheme meeting the optimization objective can be determined from the above M initial allocation schemes, and computing power allocation is performed based on the selected first target scheme. Assuming that based on the above optimization objective, among the various initial allocation schemes shown in Table 2, the determined first target allocation scheme is initial allocation scheme 3, then computing power is provided by core 1 for Bluetooth SBC, by core 2 for ADC sampling, and by core 3 for noise reduction processing and Bluetooth RF. Compared to the other initial matching schemes shown in Table 2, the actual computing powers provided by the three cores in initial allocation scheme 3 are p3, p1, and p2 + p4 respectively, which has the smallest statistical value; or compared to the other initial matching schemes shown in Table 2, the actual computing powers provided by the three cores in initial allocation scheme 3 are p3, p1, and p2 + p4, which in this case can maintain the lowest overall power consumption and/or the most balanced load of the K cores providing computing power in the sub-processor.

In an exemplary embodiment, the above storage medium 210 includes a storage area regarding the "scheduling record." After determining the above first target allocation scheme, the relevant information of the first target allocation scheme can be stored in the storage area of the "scheduling record." Exemplarily, referring to Table 3, the relevant information of the first target allocation scheme stored in the storage area of the "scheduling record" may include, for example: the relationship between each data processing operation in the data processing link and the core providing computing power for it, the attribute of the target data processed by the data processing link, and the identification information of the data processing link, among others.

Table 3

|  | Link identification | Core 1 | Core 2 | Core 3 | Target data attribute |
|---|---|---|---|---|---|
| Target allocation scheme | s1 | p3 | p1 | p2, p4 | 16-bit audio signal |
| ...... |  | ...... | ...... |  | ...... |

It should be noted that, after the computing power is reallocated for the data processing link s1, if the relevant information of the target allocation scheme changes, the relevant information of the target allocation scheme obtained after the computing power is reallocated is updated in the storage area of the "scheduling record" regarding the link. Thus, as another embodiment of the initial computing power allocation S10, when computing power is subsequently allocated for the data processing link s1, it is only necessary to look up in the above scheduling record to determine the computing power allocation scheme, which is beneficial for improving the processing efficiency of data (such as audio signals).

To sum up, one embodiment of allocating computing power for the data processing link s1 may be to first determine an initial allocation scheme and then select from the initial allocation scheme as in the above embodiment; another embodiment of allocating computing power for the data processing link s1 is to determine it by looking up a table stored in the storage medium as shown in Table 3. Meanwhile, the embodiments of the present specification further provide still another embodiment of allocating computing power for the data processing link s1: based on a preset algorithm, and using the above optimization objective as a constraint condition, perform calculation according to the above N target computing powers and the K computing powers respectively provided by the above K cores, so as to determine at least one core among the K cores that participates in the above target process, and to determine the actual operating frequency of at least one core participating in the above target process. The above preset algorithm may be any algorithm capable of implementing the above process, and the embodiments of the present application do not impose limitations thereon.

Referring again to FIG. 6, after executing S10 initial computing power allocation or after executing a certain computing power reallocation, in the above target process, the processing circuit (e.g., the processor 220-B) further obtains a monitoring result. In an exemplary embodiment of the present application, at least one of the following multiple monitoring methods is executed, so that the processing circuit (e.g., the processor 220-B) can obtain a monitoring result, and further determine whether adjustment to the computing power allocation is needed. The above multiple monitoring methods include: 1) in the above target process, through the processing circuit 220 (for example, specifically the processor 220-B), monitoring whether the computing power required for each data processing changes. Specifically, each data processing provides a monitoring interface for monitoring and outputting the current input data amount, the current output data amount, and the current processed data amount of the data processing, so as to determine whether the computing power required for the data processing changes; 2) in the above target process, using hardware such as Direct Memory Access (DMA), listening for whether a "frame drop" occurs; 3) in the above target process, through the processing circuit 220 (for example, specifically the processor 220-B), monitoring the utilization of the K cores providing computing power. The utilization of a core can be determined by the following formula.

$$\text{Core utilization} = \frac{\text{Working duration of the core}}{\text{Working duration of the core} + \text{Idle duration of the core}}$$

Through the monitoring method provided by the above embodiment, it is possible to determine in real time whether the computing power required by the N data processing stages has changed, thereby dynamically determining whether computing power reallocation is needed, and further achieving the lowest possible device power consumption while ensuring that the data (such as audio signals) are smoothly processed. Among them, the N data processing stages in the data processing link may experience an increase or decrease in required computing power, so it is necessary to determine whether computing power reallocation is needed based on the monitoring result. Specifically referring to FIG. 5, if the computing power required by the N data processing stages does not change in the above target process, then the processing circuit 220 may perform computing power allocation based on the initial computing power allocation (i.e., S10), and the result data 520 can be obtained; if the computing power required by the N data processing stages changes in the above target process, then it is necessary to specifically determine based on the monitoring result whether computing power reallocation is needed. If computing power reallocation is needed (i.e., execute S20), it is necessary to determine what kind of computing power reallocation scheme to execute based on the above monitoring result.

The monitoring result of the above monitoring method 1) includes: in the above target process, if the computing power required by the i-th (i being 1, 2, ..., N) data processing changes, and it is further determined that the core providing computing power for the i-th data processing is the j-th (j being 1, ..., K) core, the method for determining whether the j-th core has insufficient computing power is as follows: if the audio processing provided by the j-th core includes the i-th and (i+1)-th data processing, further, based on the changed required computing power of the i-th data processing and the changed required computing power of the (i+1)-th data processing, the utilization of the j-th core is determined. If the utilization is greater than a first threshold (e.g., 80%), it indicates that the core providing computing power for the data processing may have insufficient computing power; if the utilization is less than a second threshold (e.g., 40%), it indicates that the core providing computing power for the data processing may have excessive computing power.

The monitoring result of the above monitoring method 2) includes: in the above target process, if no "frame drop" phenomenon occurs, it indicates that none of the cores providing computing power for the data processing link have insufficient computing power, that is, the current target allocation scheme for the data processing link can be maintained; if a "frame drop" phenomenon occurs in the above target process, it indicates that at least one core providing computing power for the data processing link has insufficient computing power. In order to avoid a poor user experience caused by audio lag, computing power reallocation is needed. The specific implementation of the computing power reallocation will be described in detail in the subsequent embodiments.

The monitoring result of the above monitoring method 3) includes: in the above target process, if there exists a core among the K cores whose utilization is greater than a first threshold (e.g., 80%), it indicates that the core has insufficient computing power; in the above target process, if there exists a core among the K cores whose utilization is less than a second threshold (e.g., 40%), it indicates that the core has excessive computing power. **In** the case of insufficient computing power, in order to avoid a poor user experience caused by audio lag, and in the case of excessive computing power, in order to optimize computing power allocation, computing power reallocation is needed. The specific implementation of the computing power reallocation will be described in detail in the subsequent embodiments.

According to the above monitoring results, the following situations may occur in the above target process: Case 1: there exists a core with insufficient computing power but no core with excessive computing power; Case 2: there exist both a core with insufficient computing power and a core with excessive computing power; Case 3: there exists a core with excessive computing power but no core with insufficient computing power; and Case 4: there exists neither a core with insufficient computing power nor a core with excessive computing power (possibly because the computing power required by the N data processing stages has not changed, or after the change, the utilizations of all cores still fall within a preset range).

Since the existence of cores with insufficient computing power may affect the smooth execution of the N data processing stages, in order to avoid data (such as audio signal) processing lag, priority is given to the situation where cores with insufficient computing power exist (i.e., Case 1 and Case 2). Referring again to FIG. 6, execute S620: determine based on the monitoring results whether cores with insufficient computing power exist. If they exist, execute Embodiment A, or execute Embodiment B, or execute Embodiment C, or execute Embodiment D. The following embodiments will respectively provide detailed descriptions of Embodiment A, Embodiment B, Embodiment C, and Embodiment D.

In the case where it is determined that at least one core has insufficient computing power, in order to ensure the user experience of the data processing device and avoid lag in the data (such as audio signal processing) process, an approach of increasing the operating frequency of the sub-processor 240 is adopted. Specifically, the detailed implementation methods of increasing the operating frequency of the sub-processor can be divided into the following two types (i.e., Embodiment A and Embodiment B).

In exemplary Embodiment A for addressing the situation where at least one core has insufficient computing power, upon determining that at least one core has insufficient computing power, the operating frequency of the above K cores is increased to collectively increase the computing power provided by the sub-processor 240, thereby quickly resolving the lag issue in the data (such as audio signal) processing.

In exemplary Embodiment B for addressing the situation where at least one core has insufficient computing power, upon determining that at least one core has insufficient computing power, the cores with insufficient computing power are further located, and the operating frequency of the cores with insufficient computing power is further increased to specifically enhance the computing power provided by the relevant cores in the sub-processor 240, thereby solving the lag issue in the data (such as audio signal) processing while avoiding excessive power consumption of the data processing device.

It can be understood that if the cores with insufficient computing power can be accurately located (for example, the monitoring result of monitoring method 1), or the monitoring result of monitoring method 3)), then exemplary Embodiment B for addressing the situation where at least one core has insufficient computing power can be executed, so as to solve the lag issue in the data (such as audio signal) processing while avoiding excessive power consumption of the data processing device.

It can be understood that if the cores with insufficient computing power cannot be accurately located (for example, the monitoring result of monitoring method 2 shows the existence of a "frame drop" phenomenon), then exemplary Embodiment A for addressing the situation where at least one core has insufficient computing power is executed, so as to quickly solve the lag issue in the data (such as audio signal) processing. Of course, using exemplary Embodiment A for addressing the situation where at least one core has insufficient computing power has the problem of power consumption that needs optimization, but this can be addressed by executing exemplary Embodiment E, which will be described in detail below, for solving the problem of at least one core having excessive computing power.

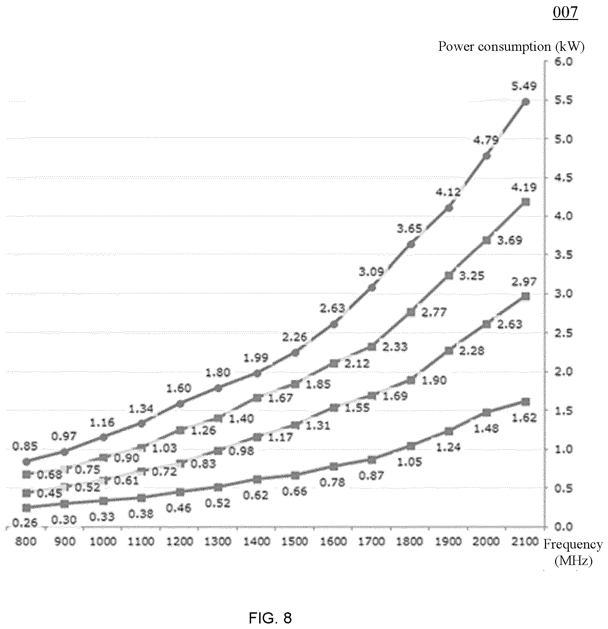

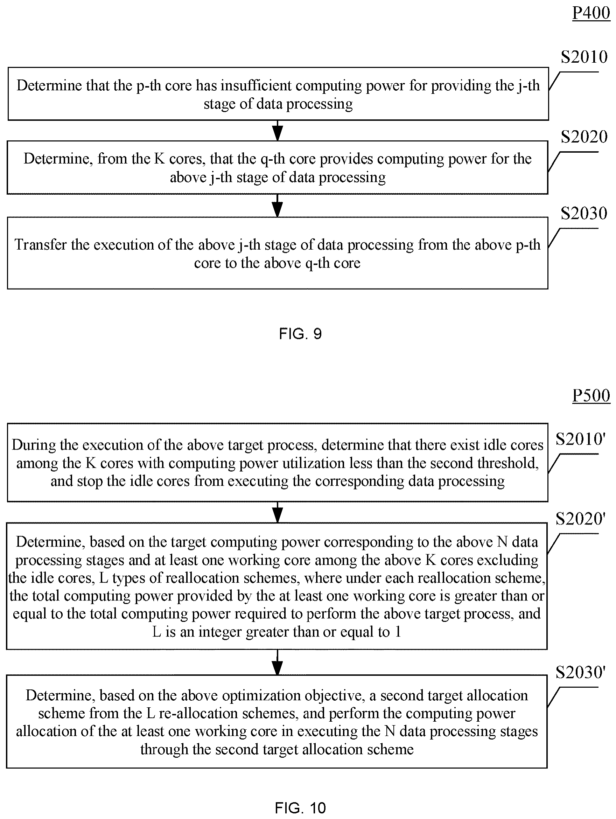

FIG. 8 illustrates a schematic diagram showing the relationship between the processor core operating frequency and processor power consumption, as well as the relationship between the number of running cores in the processor and the processor power consumption, according to an embodiment of the present application. Referring to the schematic diagram 007 of the relationship, the four curves from bottom to top respectively represent the cases of 1 to 4 running cores. It can be seen that the processor core operating frequency is positively correlated with processor power consumption, and the number of running cores in the processor is also positively correlated with processor power consumption. According to the aforementioned Embodiments A and B, upon determining that at least one core has insufficient computing power, the computing power provided by the core is increased by raising the core frequency, thereby ensuring the user experience of the data processing device. However, according to the schematic diagram 007 shown in FIG. 8, it can be seen that increasing the core operating frequency in Embodiments A and B may cause excessive power consumption of the data processing device. To avoid excessive power consumption of the data processing device, in the case of insufficient computing power, a computing power reallocation scheme as shown in FIG. 9 may also be adopted.

FIG. 9 illustrates a schematic flowchart of a computing power reallocation method under the condition of insufficient computing power according to an embodiment of the present application. The computing power reallocation method P400 can serve as exemplary Embodiment C for addressing the situation where at least one core has insufficient computing power, and can be applied to the data processing device 002 as described above. Among them, the processing circuit 220 can execute P400 under the condition of insufficient computing power. For example, the processor 220-B in the processing circuit 220 can execute the computing power reallocation method P400. As shown in FIG. 9, the data processing method P400 may include steps S2010 to S2030.

S2010: Determine that the p-th core has insufficient computing power for providing the j-th stage of data processing.

In some embodiments, the processor 220-B may determine, based on the monitoring result of monitoring method 1) or monitoring method 3), that the utilization of the 2nd core is 91%, indicating that the 2nd core has insufficient computing power. The 2nd core provides computing power for the 1st data processing and the 3rd data processing. If providing computing power only for the 1st data processing, the utilization of the 2nd core is less than the first threshold; if providing computing power only for the 3rd data processing, the utilization of the 2nd core is still greater than the first threshold, which indicates that the 2nd core has insufficient computing power for providing the 3rd data processing.

In this embodiment, the processor 220-B can move the 3rd data processing from the above-mentioned 2nd core to another core, that is, adjust so that a core other than the 2nd core provides computing power for the 3rd data processing, thereby allowing the 2nd core to provide computing power only for the 1st data processing, ensuring the smooth execution of the 1st data processing. Specifically, step S2020 can be performed: determining from the above K cores that the q-th core provides computing power for the above j-th stage of data processing, and step S2030: transferring the execution of the above j-th stage of data processing from the above p-th core to the above q-th core.

Specifically, the processor 220-B calculates, based on the current utilization of cores other than the 2nd core and the target computing power required by the 3rd data processing, which core's utilization would be less than the first threshold if computing power were additionally provided to the 2nd core. If it is determined that the utilization of the 5th core would reach 70% (less than the first threshold) when, in addition to providing computing power for one or more originally assigned data processing tasks, it also provides computing power for the 3rd data processing, then the processor 220-B determines from the above K cores that the 5th core provides computing power for the 3rd data processing, and transfers the execution of the 3rd data processing from the 2nd core to the 5th core. Clearly, in this example, p is 2, j is 3, and q is 5.

In this embodiment, after the processor 220-B determines from the above K cores that the 5th core provides computing power for the 3rd data processing, and before transferring the execution of the 3rd data processing from the 2nd core to the 5th core, the operating frequency of the 5th core may also be increased to increase the computing power of the 5th core, thereby avoiding a sudden increase in the utilization of the 5th core after the 3rd data processing is transferred, which may cause lag in the data (such as audio signal) processing.

In this embodiment, after the processor 220-B determines that the 2nd core has insufficient computing power for providing the 3rd data processing, it may also directly increase the operating frequency of the 2nd core to increase the computing power of the 2nd core, thereby avoiding lag issues caused by the 3rd data processing or the 1st data processing. Of course, if the operating frequency of the 2nd core cannot be increased, the embodiments provided by steps S2020 and S2030 can be executed to ensure the smooth execution of the data processing link.

In the case where cores with insufficient computing power are determined based on monitoring results, Embodiment D is further provided: the above M initial allocation schemes can be screened to determine whether, after computing power changes, there exists an initial allocation scheme capable of providing sufficient computing power for the current computing power demand. If there exists one initial allocation scheme capable of providing sufficient computing power for the current computing power demand, computing power allocation is performed according to that initial allocation scheme, and it is further possible to determine whether there is room for computing power optimization. If there exist two or more initial allocation schemes capable of providing sufficient computing power for the current computing power demand, the initial allocation schemes that satisfy the above optimization objective are further screened for computing power allocation, and it is further possible to determine whether there is room for computing power optimization. Specifically, in the case where there is room for computing power optimization, the following Embodiment E may be executed to reduce device power consumption while ensuring the smooth execution of the N data processing stages.

It should be noted that, in the case where cores with insufficient computing power are determined based on monitoring results, one or more of Embodiments A, B, C, and D may be executed according to actual needs. The embodiments of the present application do not impose limitations in this regard.

Referring again to FIG. 6, in the case where it is determined through S620 that no cores with insufficient computing power exist (Case 3, Case 4), step S630 is further executed: determining, based on the monitoring results, whether cores with excessive computing power exist. That is, while prioritizing ensuring the smooth execution of each data processing task, the computing power allocation of the N data processing stages is further optimized to minimize device power consumption. If it is determined through S630 that cores with excessive computing power exist, the current situation belongs to the case where cores with excessive computing power exist but no cores with insufficient computing power exist. The embodiments of the present application may execute Embodiment E or Embodiment F to optimize computing power allocation and achieve the effect of reducing device power consumption.

FIG. 10 illustrates a schematic flowchart of a computing power reallocation method under the condition of excessive computing power according to an embodiment of the present application. The computing power reallocation method P500 can serve as exemplary Embodiment E for the case where cores with excessive computing power exist, and can be applied to the data processing device 002 as described above. Among them, the processing circuit 220 can execute P500 under the condition where cores with excessive computing power exist and no cores with insufficient computing power exist. For example, the processor 220-B in the processing circuit 220 can execute the computing power reallocation method P500; as shown in FIG. 10, the data processing method P500 may include steps S2010' to S2030'.

S2010': During the execution of the above target process, determine that there exist idle cores among the K cores with computing power utilization less than the second threshold, and stop the idle cores from executing the corresponding data processing.

When the processor 220-B determines the existence of cores with excessive computing power, that is, the current existence of cores with utilization less than the second threshold (referred to as: idle cores), in order to optimize device power consumption while ensuring the user's audio listening experience, the embodiments of the present application will execute S2020' and S2030'.

In S2020', determine, based on the target computing power corresponding to the above N data processing stages and at least one working core among the above K cores excluding the idle cores, L types of reallocation schemes, where under each reallocation scheme, the total computing power provided by the at least one working core is greater than or equal to the total computing power required to perform the above target process, and L is an integer greater than or equal to 1.

In some exemplary embodiments, when K is 4, if there exists one core whose utilization is less than the second threshold, then based on the computing power respectively provided by the other three cores excluding the idle core, and the target computing power respectively required by the above N data processing stages, reallocation schemes are determined. Suppose five reallocation schemes are determined. Among the five reallocation schemes, for each reallocation scheme, the total computing power provided by the other three cores excluding the idle core is greater than or equal to the total computing power required to perform the above target process, that is, each reallocation scheme can ensure the smooth execution of the target process.

Specifically, assuming that the number of cores capable of providing computing power other than the idle core is Q (an integer greater than 1), the specific implementation of determining the above L reallocation schemes is as follows: To determine the above M initial allocation schemes, the at least one set of instructions stored in the at least one storage medium specifically includes: S1': Based on the above N target computing powers, determine the target total computing power required to perform the above target process; S2': Based on the above target total computing power, calculate the operating frequency of the above Q cores; S3': Based on the determined operating frequency and the number Q of cores providing computing power, determine the Q computable computing powers corresponding respectively to the Q cores; and S4': Based on the above N target computing powers and the Q computable computing powers, determine the above L initial allocation schemes.

Specifically, the processor 220-B in the processing circuit 220 can execute the above steps S1' to S4'; taking the data processing link of the audio signal received by the microphone of the wireless headphone 120 during a call as an example, the processor 220-B according to the foregoing embodiments determines the target computing power corresponding to each data processing stage: target computing power q1 for ADC sampling, target computing power q2 for noise reduction processing, target computing power q3 for Bluetooth SBC, and target computing power q4 for Bluetooth RF. Then, the processor 220-B can determine the target total computing power required by the data processing link: $P' = q1 + q2 + q3 + q4$. It is understandable that factors affecting the computing power measured in FLOPS include: the number of cores providing computing power in the sub-processor, the operating frequency of each core, and the floating-point calculations per cycle of the sub-processor. In this computing power reallocation process, assuming that the initial operating frequencies of each core in the sub-processor are consistent, and since the target total computing power P' required by the data processing link, the number of cores Q providing computing power in the sub-processor, and the floating-point calculations per cycle of the sub-processor are known, the operating frequency of the Q cores can be determined, for example, f0'.

Further, the processor 220-B determines the computing power respectively provided by the Q cores based on the operating frequency f0', where the computing power provided by each core is: f0' × the floating-point calculations per cycle of the sub-processor. The processor 220-B, based on the target computing powers q1, q2, q3, and q4 respectively required by the N data processing stages, and the computing power respectively provided by the Q cores (assuming Q is 3), can determine L types of initial allocation schemes (such as Table 4).

Table 4

|  | Core 1 | Core 2 | Core 3 |
|---|---|---|---|
| Reallocation Scheme 1 | q1 | q3, q2 | q4 |
| Reallocation Scheme 2 | q1 | q4, q2 | q3 |
| Reallocation Scheme 3 | q3 | q1 | q2, q4 |
| ...... | ...... | ...... | ...... |

It should be noted that, in order to ensure the smooth execution of the audio processing procedure, each re-allocation scheme satisfies that the computing power provided by each core is greater than or equal to the sum of the computing power required by its corresponding data processing. For example, referring to Table 4, in re-allocation scheme 1, the computing power provided by core 1 is greater than q3, the computing power provided by core 2 is greater than q3 + q2, and the computing power provided by core 3 is greater than q4. Of course, in re-allocation scheme 1, the sum of the computing power provided by core 1, core 2, and core 3 is greater than the target total computing power P' required by the data processing link.

In S2030', determine, based on the above optimization objective, a second target allocation scheme from the L re-allocation schemes, and perform the computing power allocation of the at least one working core in executing the N data processing stages through the second target allocation scheme.

In this embodiment, the second target allocation scheme determined based on the above optimization objective specifically refers to the allocation scheme with the smallest target statistical value of the actual computing power provided by the corresponding K cores among the selectable multiple re-allocation schemes, where the above statistical value is variance or standard deviation. Alternatively, the second target allocation scheme determined based on the above optimization objective specifically refers to the re-allocation scheme selected from the multiple optional re-allocation schemes that can maintain the lowest overall power consumption and/or the most balanced load of the K cores providing computing power in the sub-processor. Through the above optimization objective, the second target allocation scheme that meets the above optimization objective can be determined from the above L re-allocation schemes, and the computing power allocation is performed based on the selected second target scheme. If, based on the above optimization objective, the second target allocation scheme determined from the various re-allocation schemes shown in Table 4 is re-allocation scheme 2, then computing power is provided through core 1 for Bluetooth SBC, through core 2 for ADC sampling and Bluetooth RF, and through core 3 for noise reduction processing, and compared with other re-matching schemes shown in Table 4, the actual computing power respectively provided by the three cores in re-allocation scheme 2 is: q1, p2 + p4, and q3, whose statistical value is the smallest. Or compared with other re-matching schemes shown in Table 4, the actual computing power respectively provided by the three cores in re-allocation scheme 2 is: q1, p2 + p4, and q3, under which the lowest overall power consumption and/or the most balanced load of the Q cores providing computing power in the sub-processor can be maintained.

In the case where, based on the monitoring result, it is determined that there is no core with insufficient computing power and that there exists a core with excessive computing power, Embodiment F is further provided: locating the core with excessive computing power, and further, based on a first threshold value (e.g., 80%) and a second threshold value (e.g., 40%) set for utilization, reducing the operating frequency of the core, so that after the operating frequency is reduced, the utilization of the core falls between the second threshold value and the first threshold value, i.e., there is neither excessive computing power nor insufficient computing power, thereby enabling the power consumption of the sub-processor to be reduced while ensuring that each data processing stage has sufficient computing power, and thus facilitating the reduction of power consumption of the audio processing device.

Same as the above embodiment, the above storage medium 210 includes a storage area for the "scheduling record", and after determining the above second target allocation scheme, the prior target allocation scheme already stored in the storage area of the "scheduling record" for processing the same target data using the same data processing link may be updated through the above second target allocation scheme. Exemplarily, the relevant information of the second target allocation scheme stored in the storage area of the "scheduling record" may include: the relationship between each data processing stage in the data processing link and the core providing computing power for it, the attributes of the target data processed by the data processing link, and the data processing link, etc.

Continuing to refer to FIG. 6, if it is determined through S630 that there is no core with excessive computing power, and the current situation is that there exists neither a core with excessive computing power nor a core with insufficient computing power, then the embodiment of the present application executes S610 again to continuously monitor the computing power required by each data processing stage in the above target process, so as to minimize device power consumption while ensuring that sufficient computing power is allocated to each data processing stage throughout the entire target process.

In summary, the embodiments of the present application provide a data processing device and a data processing method, where the processing circuit 220 includes a multi-core processor 220-A, and the multi-core processor 220-A includes a sub-processor 240 with K cores for participating in the target process of generating result data by processing target data through N data processing stages. Specifically, the processing circuit 220 obtains the above target data and determines the N target computing power corresponding to the above N data processing stages, and in the above target process, determines the allocation of the K cores in executing the above N data processing stages based on the above N target computing power and a preset optimization objective. It can be seen that the solution provided by the present application can, during the operation of the data processing device, determine the computing power respectively provided by the K cores for the N data processing stages, and adaptively allocate the corresponding target computing power to each data processing stage. For example, when one or more data processing stages are added, replaced, or deleted from a certain data processing link, the data processing device can adaptively adjust the computing power allocation. It can be seen that the solution provided in the embodiment of the present application is conducive to adapting to the expansion of the data processing link. At the same time, compared with the related art in which each core is required to be pre-assigned to be responsible for one or more data processing stages, the method provided in the present application is conducive to improving the flexibility of computing power allocation.

In another aspect, the present application provides a non-transitory storage medium storing at least one set of executable instructions for performing data processing. When the executable instructions are executed by a processor, the instructions direct the processor to perform the steps of the data processing method P100 described in the present application. In some possible embodiments, various aspects of the present application may also be implemented in the form of a program product, which includes program code. When the program product runs on an acoustic system, the program code is used to cause the acoustic system to perform the steps of the data processing method P100 described in the present application. The program product for implementing the above method may take the form of a compact disc read-only memory (CD-ROM) containing program code and may run on the acoustic system. However, the program product of the present application is not limited thereto. In the present application, the readable storage medium may be any tangible medium that contains or stores a program, which can be used by or in conjunction with an instruction execution system. The program product may take any combination of one or more readable media. The readable medium may be a readable signal medium or a readable storage medium. The readable storage medium may be, but is not limited to, an electrical, magnetic, optical, electromagnetic, infrared, or semiconductor system, apparatus, or device, or any combination of the above. More specific examples of the readable storage medium include: electrical connections with one or more wires, portable disks, hard disks, random access memory (RAM), read-only memory (ROM), erasable programmable read-only memory (EPROM or Flash memory), optical fiber, compact disc read-only memory (CD-ROM), optical storage devices, magnetic storage devices, or any suitable combination of the above. The computer-readable storage medium may include a data signal propagated in baseband or as part of a carrier, which carries readable program code. Such a propagated data signal may take various forms, including but not limited to electromagnetic signals, optical signals, or any suitable combination of the above. The readable medium may also be any readable medium other than a readable storage medium, which can transmit, propagate, or transport a program to be used by or in conjunction with an instruction execution system, apparatus, or device. The program code contained on the readable storage medium may be transmitted using any appropriate medium, including but not limited to wireless, wire, optical cable, RF, etc., or any suitable combination of the above. The program code for performing the operations of the present application may be written in any combination of one or more programming languages, including object-oriented programming languages, such as Java, C++, etc., and procedural programming languages, such as the "C" language or similar programming languages. The program code may execute entirely on the acoustic system, partly on the acoustic system, as a standalone software package, partly on the acoustic system and partly on a remote computing device, or entirely on a remote computing device.

The specific embodiments of the present application have been described above. Other embodiments are within the scope of the appended claims. In some cases, the actions or steps recited in the claims may be performed in an order different from that in the embodiments and still achieve the desired results. Additionally, the processes depicted in the accompanying drawings do not necessarily require a specific order or sequential order to achieve the desired results. **In** certain embodiments, multitasking and parallel processing are also possible or may be advantageous.

In summary, after reading the detailed disclosure herein, a person skilled in the art will understand that the foregoing detailed disclosure is presented only by way of example and may not be limiting. Although not explicitly stated herein, a person skilled in the art will understand that the present application encompasses various reasonable changes, improvements, and modifications to the embodiments. These changes, improvements, and modifications are intended to be proposed by the present application and fall within the spirit and scope of the exemplary embodiments of the present application.

In addition, certain terms in the present application have been used to describe the embodiments of the present application. For example, "an embodiment," "embodiment," and/or "some embodiments" mean that a particular feature, structure, or characteristic described in connection with that embodiment may be included in at least one embodiment of the present application. Therefore, it can be emphasized and should be understood that two or more references to "an embodiment" or "one embodiment" or "alternative embodiment" in various parts of the present application do not necessarily refer to the same embodiment. Moreover, particular features, structures, or characteristics may be appropriately combined in one or more embodiments of the present application.

It should be understood that in the foregoing description of embodiments of the present application, in order to aid understanding of a feature and for the purpose of simplifying the present application, various features are combined in a single embodiment, drawing, or its description. However, this does not mean that the combination of these features is necessary. A person skilled in the art, when reading the present application, can fully identify some of the devices as separate embodiments. In other words, the embodiments in the present application can also be understood as an integration of multiple sub-embodiments. Each sub-embodiment is valid even when it includes fewer features than all the features of a single aforementioned disclosed embodiment.

Each patent, patent application, publication of a patent application, and other materials, such as articles, books, specifications, publications, documents, articles, etc., cited herein, except for any historical prosecution documents to which it relates, which may be inconsistent with or any identities that conflict, or any identities that may have a restrictive effect on the broadest scope of the claims, are hereby incorporated by reference for all purposes now or hereafter associated with this document. Furthermore, in the event of any inconsistency or conflict between the description, definition, and/or use of a term associated with any contained material, the term used in this document shall prevail.

Finally, it should be understood that the embodiments disclosed herein are illustrations of the principles of the present application. Other modified embodiments are also within the scope of the present application. Therefore, the embodiments disclosed in the present application are only exemplary and not restrictive. A person skilled in the art may make alternative configurations to implement the present application based on the embodiments disclosed herein. Accordingly, the embodiments of the present application are not limited to the embodiments precisely described herein.

**Claims**

1.  A data processing device, **characterized by** comprising:

    at least one storage medium, storing at least one set of instructions, wherein the at least one set of instructions is configured to perform computing power scheduling in a target process where target data undergoes N data processing stages to generate result data; and
    a processing circuit, comprising a multi-core processor and communicatively connected to the at least one storage medium, wherein the multi-core processor comprises a sub-processor of K cores participating in the target process, and K is an integer greater than 1,
    wherein during operation of the data processing device, the processing circuit executes the at least one set of instructions to:

    obtain the target data,
    determine N target computing powers corresponding to the N data processing stages, and
    in the target process, determine an allocation of the K cores in executing the N data processing stages based on the N target computing powers and a preset optimization objective.

2.  The data processing device according to claim 1, **characterized in that**, in order to determine the allocation of the K cores in executing the N data processing stages, the processing circuit executes the at least one set of instructions to:

    determine M initial allocation schemes for allocating respective cores to the N data processing stages according to the N target computing powers, wherein each of the initial allocation schemes satisfies that the computing power available to each of the cores is greater than or equal to a sum of the computing powers required by the corresponding data processing stages, M is an integer greater than or equal to 1; and
    determine a first target allocation scheme from the M initial allocation schemes to execute, based on the optimization objective.

3.  The data processing device according to claim 2, **characterized in that**, in order to determine the M initial allocation schemes, the processing circuit executes the at least one set of instructions to:

    determine a target total computing power required to execute the target process according to the N target computing powers;
    determine initial operating frequencies of the K cores according to the target total computing power;

determine K available computing powers respectively corresponding to the K cores according to the initial operating frequencies; and

determine the M initial allocation schemes according to the N target computing powers and the K available computing powers.

4. The data processing device according to claim 2, **characterized in that** each of the M initial allocation schemes comprises: at least one core participating in the target process, and an actual computing power provided by the at least one core participating in the target process and/or an actual operating frequency of the at least one core participating in the target process.

5. The data processing device according to claim 1, **characterized in that**, in order to determine the allocation of the K cores in executing the N data processing stages, the processing circuit executes the at least one set of instructions to: determine, based on a preset algorithm, at least one core participating in the target process from among the K cores and determine an actual operating frequency of the at least one core participating in the target process, according to the N target computing powers, the K available computing powers respectively corresponding to the K cores, and the optimization objective.

6. The data processing device according to claim 1, **characterized in that** the optimization objective is to select, among multiple optional allocation schemes, an allocation scheme in which a target statistical value of actual computing powers respectively provided by the K cores is the smallest, wherein the statistical value is a variance or a standard deviation.

7. The data processing device according to claim 1, **characterized in that** the optimization objective comprises: maintaining an overall power consumption of the K cores at a lowest level and/or achieving a most balanced load.

8. The data processing device according to claim 1, **characterized in that** the processing circuit further executes the at least one set of instructions to:

   determine, during execution of the target process, a situation where the K cores have insufficient computing power; and
   increase the operating frequencies of the K cores to increase the computing power provided by the sub-processor, so as to avoid lag in a data processing process.

9. The data processing device according to claim 1, **characterized in that** the processing circuit further executes the at least one set of instructions to:

   determine, during execution of the target process, that there are O cores among the K cores having insufficient computing power, where O is a positive integer not greater than K;
   and
   increase the operating frequencies of the O cores to increase the computing power of a q-th core so as to avoid lag in a data processing process.

10. The data processing device according to claim 9, **characterized in that** the insufficient computing power comprises: any one of the K cores having a computing power utilization exceeding a first threshold.

11. The data processing device according to claim 1, **characterized in that** the processing circuit further executes the at least one set of instructions to:

   during execution of the target process, determine idle cores among the K cores with computing power utilization less than a second threshold, and stop the idle cores from performing corresponding data processing;
   based on the N target computing powers and at least one working core among the K cores excluding the idle cores, determine L reallocation schemes, wherein under each reallocation scheme, a total computing power provided by the at least one working core is greater than or equal to a total computing power required to execute the target process, wherein L is an integer greater than or equal to 1; and
   based on the optimization objective, determine a second target allocation scheme from the L reallocation schemes, and perform computing power allocation of the at least one working core for executing the N data processing tasks through the second target allocation scheme.

**12.** The data processing device according to claim 1, **characterized in that** to achieve the optimization objective, the processing circuit further executes the at least one set of instructions to:

during execution of the target process, determine that a computing power provided by a p-th core for a j-th data processing is insufficient;

determine the q-th core from the K cores to provide computing power for the j-th data processing; and

transfer the execution of j-th data processing from the p-th core to the q-th core.

**13.** The data processing device according to claim 12, **characterized in that** the processing circuit further executes the at least one set of instructions to:

prior to transferring the execution of the j-th data processing from the p-th core to the q-th core, increase an operating frequency of the q-th core to increase the computing power of the q-th core to avoid lag in the data processing process.

**14.** The data processing device according to claim 1, **characterized in that** the processing circuit further executes the at least one set of instructions to:

during execution of the target process, determine R cores among the K cores with insufficient computing power, wherein R is a positive integer not greater than K;

in response to idle cores among the K cores with a computing power utilization less than a second threshold, transfer at least part of the data processing corresponding to the R cores to the idle cores, wherein after the transfer, an available computing power of each of the cores is greater than or equal to a sum of computing powers required for the corresponding data processing.

**15.** The data processing device according to claim 1, **characterized in that** the at least one storage medium is further associated with storage of: attributes of the target data and target computing power corresponding to performing at least one data processing on the target data;

in order to determine the N target computing powers corresponding to the N data processing stages, the processing circuit executes the at least one set of instructions to:

search the at least one storage medium according to obtained attributes of the target data to obtain the N target computing powers corresponding to performing the N data processing stages on the target data.

**16.** The data processing device according to claim 15, **characterized in that** the processing circuit executes the at least one set of instructions to:

in response to the at least one storage medium not storing the N target computing powers corresponding to performing N data processing stages on the target data with a target attribute, calculate the N target computing powers respectively required for processing the target data with the target attribute in the N data processing stages; and

store, in association with the target attribute, the N target computing powers corresponding to performing the N data processing stages on the target data with the target attribute into the at least one storage medium.

**17.** The data processing device according to claim 1, **characterized in that** the at least one storage medium further stores: for multiple attributes of the target data, core identifiers that provide computing power for processing the target data with each attribute respectively for the N data processing stages;

in order to determine the allocation of the K cores in executing the N data processing stages, the processing circuit executes the at least one set of instructions to:

search the at least one storage medium according to a target attribute of the target data to obtain the core identifiers that provide computing power respectively for the N data processing stages for processing the target data with the target attribute, so as to determine the allocation of the K cores in executing the N data processing stages.

**18.** The data processing device according to claim 1, **characterized in that** the data processing device is a headphone.

**19.** A data processing method, **characterized by** comprising:

obtaining target data;

determining N target computing powers corresponding to performing N data processing stages; and

in a target process, determining, based on the N target computing powers and a preset optimization objective, the allocation of K cores in a multi-core processor for executing the N data processing stages, wherein K is an integer greater than 1, wherein
the target process is a process of generating result data from the target data through the N data processing stages.

20. The data processing method according to claim 19, **characterized in that** the determining of the allocation of the K cores for executing the N data processing stages comprises:

determining M initial allocation schemes for allocating respective cores to the N data processing stages according to the N target computing powers, wherein each of the initial allocation schemes satisfies that the computing power available to each of the cores is greater than or equal to a sum of the computing powers required by the corresponding data processing stages, M is an integer greater than or equal to 1; and
determining a first target allocation scheme from the M initial allocation schemes to execute, based on the optimization objective.

21. The data processing method according to claim 20, **characterized in that** the determining of the M types of initial allocation schemes comprises:

determining a target total computing power required to execute the target process according to the N target computing powers;
determining initial operating frequencies of the K cores according to the target total computing power;
determining K available computing powers respectively corresponding to the K cores according to the initial operating frequencies; and
determining the M initial allocation schemes according to the N target computing powers and the K available computing powers.

22. The data processing method according to claim 20, **characterized in that** each of the M initial allocation schemes comprises: at least one core participating in the target process, and an actual computing power provided by the at least one core participating in the target process and/or an actual operating frequency of the at least one core participating in the target process.

23. The data processing method according to claim 19, **characterized in that** the determining of the allocation of the K cores in executing the N data processing stages comprises:
determining, based on a preset algorithm, at least one core participating in the target process from among the K cores and determine an actual operating frequency of the at least one core participating in the target process, according to the N target computing powers, the K available computing powers respectively corresponding to the K cores, and the optimization objective.

24. The data processing method according to claim 19, **characterized in that** the optimization objective is to select, among multiple optional allocation schemes, an allocation scheme in which a target statistical value of actual computing powers respectively provided by the K cores is the smallest, wherein the statistical value is a variance or a standard deviation.

25. The data processing method according to claim 19, **characterized in that** the optimization objective comprises:
maintaining an overall power consumption of the K cores at a lowest level and/or achieving a most balanced load.

26. The data processing method according to claim 19, **characterized in that** the method further comprises:

determining, during execution of the target process, a situation where the K cores have insufficient computing power; and
increasing the operating frequencies of the K cores to increase the computing power provided by the sub-processor, so as to avoid lag in a data processing process.

27. The data processing method according to claim 19, **characterized in that** the method further comprises:

during execution of the target process, determining that there are O cores among the K cores having insufficient computing power, where O is a positive integer not greater than K;
and
increasing the operating frequencies of the O cores to increase the computing power of a q-th core so as to avoid lag in a data processing process.

28. The data processing method according to claim 27, **characterized in that** the insufficient computing power comprises: any one of the K cores having a computing power utilization exceeding a first threshold.

29. The data processing method according to claim 19, **characterized in that** the method further comprises:

during execution of the target process, determining idle cores among the K cores with computing power utilization less than a second threshold, and stop the idle cores from performing corresponding data processing;
based on the N target computing powers and at least one working core among the K cores excluding the idle cores, determining L reallocation schemes, wherein under each reallocation scheme, a total computing power provided by the at least one working core is greater than or equal to a total computing power required to execute the target process, wherein L is an integer greater than or equal to 1; and
based on the optimization objective, determining a second target allocation scheme from the L reallocation schemes, and performing computing power allocation of the at least one working core for executing the N data processing tasks through the second target allocation scheme.

30. The data processing method according to claim 19, **characterized in that** the method further comprises:

during execution of the target process, determining that a computing power provided by a p-th core for a j-th data processing is insufficient;
determining the q-th core from the K cores to provide computing power for the j-th data processing; and
transferring the execution of j-th data processing from the p-th core to the q-th core.

31. The data processing method according to claim 19, **characterized in that** the method further comprises:
prior to transferring the execution of the j-th data processing from the p-th core to the q-th core, increase an operating frequency of the q-th core to increase the computing power of the q-th core to avoid lag in the data processing process.

001

FIG. 1

002

FIG. 2

003

Processing circuit

Multi-core processor 220-A

Sub-processor 240

Processor 220-B

220

FIG. 3A

004

Processing circuit

Processor 220-C

Multi-core processor 220-A

Sub-processor 240

220

FIG. 3B

005

Processing circuit

Processor 220-C

Multi-core processor 220-A

Sub-processor 240

Processor 220-B

220

FIG. 3C

<u>P100</u>

| | |
|---|---|
| Obtain target data — S410 | Determine N target computing powers corresponding to the N data processing stages — S420 |

In a target process, based on the N target computing powers and a preset optimization objective, determine allocation of K cores of a multi-core processor participating in the target process for executing the N data processing stages — S430

FIG. 4

<u>006</u>

N target computing powers corresponding to N data processing stages — 510

No change in N target computing powers

At least one target computing power changes

Processing circuit — 220

Initial computing power allocation — S10

Reallocation of computing power — S20

N data processing stages — S30

Target data — 500

Result data — 520

FIG. 5

P200

S410

Obtain target data

S420

Determine N target computing powers corresponding to the N data processing stages

S10

Perform initial computing power allocation

S610

Obtain monitoring results

S620

Determine, based on the monitoring results, whether cores with insufficient computing power exist

Y → Execute Embodiment A, or execute Embodiment B, or execute Embodiment C, or execute Embodiment D

N

S630

Determine, based on the monitoring results, whether cores with excessive computing power exist

Y → Execute Embodiment E, or execute Embodiment F

N

FIG. 6

P300

Determine, based on the N target computing powers, M initial allocation schemes to allocate corresponding cores to the N data processing stages, where each initial allocation scheme satisfies that the computing power provided by each core is greater than or equal to the sum of the computing powers required by the corresponding data processing, and M is an integer greater than or equal to 1

S1010

Determine, based on the optimization objective, a first target allocation scheme to execute from the above M initial allocation schemes

S1020

FIG. 7

FIG. 8

P400

S2010

Determine that the p-th core has insufficient computing power for providing the j-th stage of data processing

S2020

Determine, from the K cores, that the q-th core provides computing power for the above j-th stage of data processing

S2030

Transfer the execution of the above j-th stage of data processing from the above p-th core to the above q-th core

FIG. 9

P500

S2010'

During the execution of the above target process, determine that there exist idle cores among the K cores with computing power utilization less than the second threshold, and stop the idle cores from executing the corresponding data processing

S2020'

Determine, based on the target computing power corresponding to the above N data processing stages and at least one working core among the above K cores excluding the idle cores, L types of reallocation schemes, where under each reallocation scheme, the total computing power provided by the at least one working core is greater than or equal to the total computing power required to perform the above target process, and L is an integer greater than or equal to 1

S2030'

Determine, based on the above optimization objective, a second target allocation scheme from the L re-allocation schemes, and perform the computing power allocation of the at least one working core in executing the N data processing stages through the second target allocation scheme

FIG. 10

## INTERNATIONAL SEARCH REPORT

| International application No. |
| --- |
| **PCT/CN2023/112935** |

### A. CLASSIFICATION OF SUBJECT MATTER

G06F9/50(2006.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CJFD, CNTXT, ENTXTC, ENTXT, WPABSC, DWPI, CNKI: 韶音科技, 多核, 众核, 核, 算力, 调度, 分配, 道, 段, 流水线, 算子, 方案, 选择, 频率, 占用率, 使用率, 阈值; mul-core, core, computing resource, schedul+, distribut+, allocat+, segment, pipeline, operator?, scheme, select, frequency, occup+, utili+, usage, rate, threshold

### C. DOCUMENTS CONSIDERED TO BE RELEVANT

| Category* | Citation of document, with indication, where appropriate, of the relevant passages | Relevant to claim No. |
| --- | --- | --- |
| X | CN 115080496 A (BEIJING LYNXI TECHNOLOGY CO., LTD.) 20 September 2022 (2022-09-20)<br>description, paragraphs [0030]-[0129], and figures 1-6 | 1, 5-7, 15-19, 23-25 |
| Y | CN 115080496 A (BEIJING LYNXI TECHNOLOGY CO., LTD.) 20 September 2022 (2022-09-20)<br>description, paragraphs [0030]-[0129], and figures 1-6 | 2-4, 8-14, 20-22, 26-31 |
| X | CN 114546392 A (STREAM COMPUTING INC.) 27 May 2022 (2022-05-27)<br>description, paragraphs [0002]-[0066] and [0093]-[0123] | 1, 5-7, 15-19, 23-25 |
| Y | CN 114546392 A (STREAM COMPUTING INC.) 27 May 2022 (2022-05-27)<br>description, paragraphs [0002]-[0066] and [0093]-[0123] | 2-4, 8-14, 20-22, 26-31 |
| Y | CN 114911604 A (HUAWEI TECHNOLOGIES CO., LTD.) 16 August 2022 (2022-08-16)<br>description, paragraphs [0050]-[0072] | 2-4, 20-22 |
| Y | WO 2022247189 A1 (BEIJING LYNXI TECHNOLOGY CO., LTD.) 01 December 2022 (2022-12-01)<br>description, page 2, line 31 to page 3, line 45, page 7, line 4 to page 10, line 36 | 8-14, 26-31 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **16 April 2024** | **18 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/112935** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2016034310 A1 (EMPIRE TECHNOLOGY DEVELOPMENT LLC) 04 February 2016 (2016-02-04) entire document | 1-31 |

Form PCT/ISA/210 (second sheet) (July 2022)

## INTERNATIONAL SEARCH REPORT
### Information on patent family members

International application No.

**PCT/CN2023/112935**

| Patent document cited in search report | | | Publication date (day/month/year) | Patent family member(s) | | | Publication date (day/month/year) |
|---|---|---|---|---|---|---|---|
| CN | 115080496 | A | 20 September 2022 | None | | | |
| CN | 114546392 | A | 27 May 2022 | None | | | |
| CN | 114911604 | A | 16 August 2022 | None | | | |
| WO | 2022247189 | A1 | 01 December 2022 | CN | 115391021 | A | 25 November 2022 |
| US | 2016034310 | A1 | 04 February 2016 | US | 9256470 | B1 | 09 February 2016 |

Form PCT/ISA/210 (patent family annex) (July 2022)